# EUROPEAN PATENT APPLICATION

(11) **EP 4 768 845 A1**
(43) Date of publication of application: **01.07.2026**
(21) Application number: 25227079.8
(22) Date of filing: 23.12.2025
(51) Int. Cl.: G01B 5/00, G01B 11/16

(54) **SYSTEM FOR GAS MIXING WITHIN A SENSOR FIELD OF VIEW FOR VIDEO EXTENSOMETERS**

(30) Priority: 30.12.2024 US 202463739958 P; 08.12.2025 US 202519411839
(71) Applicant: Illinois Tool Works Inc., Glenview IL 60025 (US)
(72) Inventor: RIDDICK, Adrian Charles, Glenview, 60025 (US); BOWSER, Jeffrey Alan, Glenview, 60025 (US); ARYANA, Chadwick Kadek, Glenview, 60025 (US)
(74) Representative: HGF

(57) **Abstract**

Disclosed example video extensometers include: an optical sensor having a field of view; and a fan positioned within a housing and adjacent the optical sensor, and configured to mix a gas within the field of view of the optical sensor, the housing having a inlet directed toward the field of view of the optical sensor and adjacent to the optical sensor to draw gas from a region within the field of view of the optical sensor, and the housing having an outlet configured to direct the gas blown by the fan into the field of view of the optical sensor to mix the gas within the field of view of the optical sensor.

## Description

### RELATED APPLICATIONS

The present application claims the benefit of U.S. Provisional Patent Application Serial No. 63/739,958, filed December 30, 2024, entitled "SYSTEMS AND METHODS FOR GAS MIXING WITHIN A SENSOR FIELD OF VIEW FOR VIDEO EXTENSOMETERS." The entirety of U.S. Provisional Patent Application Serial No. 63/739,958 is expressly incorporated herein by reference.

### FIELD OF THE DISCLOSURE

This disclosure relates to material testing systems and, more particularly, to systems and methods for gas mixing within a sensor field of view for video extensometers.

### BACKGROUND

Camera based vision systems have been implemented as part of materials testing systems, for measurement of specimen strain. These systems collect one or more images of a specimen under test, with these images being synchronized with other signals of interest for the test (e.g., specimen load, machine actuator/crosshead displacement, etc.). The images of the test specimen can be analyzed to locate and track specific features of the specimen as the test progresses. Changes in the location of such features, such as a width of the specimen, allows local specimen deformation to be calculated and in turn specimen strain to be computed.

### SUMMARY

Systems and methods for gas mixing within a sensor field of view for video extensometers are disclosed, substantially as illustrated by and described in connection with at least one of the figures..

### BRIEF DESCRIPTION OF THE DRAWINGS

The benefits and advantages of the present disclosure will become more readily apparent to those of ordinary skill in the relevant art after reviewing the following detailed description and accompanying drawings, wherein:
FIG. 1 is a block diagram of an example extensometer system, in accordance with aspects of this disclosure.
FIG. 2 is an example test specimen for measurement in the extensometer system of FIG. 1.
FIG. 3 is a perspective view of an example imaging device that may be used to implement the imaging device of FIG. 1, including fans to reduce imaging noise resulting from turbulence in the field of view of the imaging device.
FIG. 4 is a side elevation view of the example imaging device of FIG. 3.
FIG. 5 is a partially exploded view of the example imaging device of FIG. 3.
FIGS. 6A and 6B are perspective views of the example fan housing of FIGS. 3-5.
FIG. 7A is a top front left perspective view of the example manifold of FIG. 3.
FIG. 7B is a bottom rear right perspective view of the example manifold of FIG. 3.
FIG. 8 is a block diagram of an example implementation of the extensometer system of FIG. 1.

The figures are not necessarily to scale. Where appropriate, similar or identical reference numbers are used to refer to similar or identical components.

### DETAILED DESCRIPTION

Video extensometer systems can be sensitive to variations in the environment between the imaging device and the test specimen. For example, the refractive index of the gas (e.g., air) within the field of view of the imaging device and the test specimen affects the measurement by the imaging device. In the event that the refractive index of the gas and/or other characteristics of the environment vary during measurements by the imaging device, the measurements may be subject to noise or other sources of error. Some conventional video extensometer systems attempt to control the environment within the field of view by containing the gas within the field of view to reduce variation, and/or by inducing a vacuum in at least a portion of the field of view. Other conventional video extensometer systems provide a controlled airflow in an open environment over portions of the field of view.

Disclosed example systems and methods improve the homogeneity of the gas in the field of view of a video extensometer imaging device by inducing airflow over a larger portion of the field of view between the imaging device and the test specimen. In some examples, one or more fans include an inlet directed toward a portion of the field of view adjacent to (e.g., closest to) the optical sensor of the imaging device. In some such examples, the inlets are configured to generate an gas flow that sweeps over a lens of the optical sensor, which also provides active cooling of the imaging device. In some examples, the fan(s) further include an outlet that directs the gas flow received from the inlet toward the field of view and toward the test specimen to create homogeneous gas characteristics, thereby reducing the imaging noise at the optical sensor. The fan(s) may further include secondary outlets that direct the gas flow further toward the field of view that the primary outlet, to improve the flow of gas over additional portions of the field of view that may not experience as much gas flow from the inlets and/or the primary outlets of the fans.

In some disclosed examples, the imaging device further includes a manifold to further control the gas flow within the field of view of the optical sensor. The manifold may include gas inlets to draw gas in through the field of view of the optical sensor, and gas outlets corresponding to the gas inlets of the fans.

As used herein, material testing systems, including material testing systems that apply tension, compression, and/or torsion, include one or more components that incur displacement and/or load bearing to apply and/or measure stresses on a test specimen. In some examples, a video extensometer system is employed in specimen strain testing, which can include one or more of collecting high resolution images, providing the images to an image processor, analyzing the images to identify one or more specimen characteristics corresponding to displacement or strain value, and generating an output corresponding to the characteristics. In some examples, the identified characteristics (such as width) from the one or more collected images are compared against one or more sources, such as a list of threshold values or to an image collected previously (i.e. prior to testing). In some examples, a value of the identified characteristic may be applied to one or more algorithms to generate an output corresponding to displacement or strain value associated with the test specimen.

In disclosed examples, extensometers may include an external machine vision imaging device connected to a processing system or computing platform and/or video processing hardware and use software and/or hardware to convert the data from the camera to an electrical signal or having a software interface compatible with the materials testing system.

As disclosed herein, camera based image capture (e.g., vision or video) systems are implemented in materials testing systems for measurement of strain on the test specimen. Such systems collect multiple images of the specimen under test (i.e. during a testing process), with the images being synchronized with other signals of interest for the test (such as specimen load, machine actuator and/or crosshead displacement, etc.). The images of the specimen are analyzed (e.g., in real-time and/or post-test) by algorithms to locate and track specific specimen characteristics as the test progresses. For instance, a change in a location, size, shape, etc., of such characteristics allows for test specimen deformation to be calculated, which leads in turn to analysis and calculation of specimen strain.

According to aspects of this disclosure, example video extensometers include: an optical sensor having a field of view; and a fan positioned within a housing and adjacent the optical sensor, and configured to mix a gas within the field of view of the optical sensor, the housing having a inlet directed toward the field of view of the optical sensor and adjacent to the optical sensor to draw gas from a region within the field of view of the optical sensor, and the housing having an outlet configured to direct the gas blown by the fan into the field of view of the optical sensor to mix the gas within the field of view of the optical sensor.

In some example video extensometers, the housing includes a secondary outlet directed toward the field of view adjacent to the optical sensor and configured to direct at least a portion of the gas blown by the fan toward the portion of the field of view adjacent to the optical sensor. Some example video extensometers further include a second fan positioned within a second housing and adjacent the optical sensor, and configured to mix the gas within the field of view of the optical sensor, the second housing having a second inlet directed toward the region within the field of view of the optical sensor adjacent to the optical sensor to draw the gas from the region within the field of view of the optical sensor, and the housing having a second outlet configured to direct the gas blown by the second fan to mix the gas in the field of view. In some example video extensometers, the first fan and the second fan are positioned on opposite sides of the optical sensor.

In some example video extensometers, the fan is located above the optical sensor and the second fan is located below the optical sensor in an installed arrangement. In some example video extensometers, the second housing includes a secondary outlet directed toward the field of view adjacent to the optical sensor and configured to direct at least a portion of the gas blown by the second fan toward the portion of the field of view adjacent to the optical sensor.

In some example video extensometers, the fan is configured to homogenously mix the gas occupying the region within the field of view of the optical sensor between the optical sensor and the test specimen. In some example video extensometers, the fan is positioned at least partially toward the test specimen relative to the optical sensor. In some example video extensometers, the gas is air. In some example video extensometers, the inlet and the outlet are each at least as wide as a width of the test specimen.

In some example video extensometers, a center of the inlet is positioned farther toward a rear end of the housing than a front end of the housing, and the front end of the housing is closer to the test specimen than the rear end of the housing. In some example video extensometers, the inlet is positioned to draw at least a portion of the gas over a lens of the optical sensor prior to entry of the gas into the housing. In some example video extensometers, the fan is positioned to mix the gas for an entire length of the field of view between the optical sensor and the test specimen. Some example video extensometers further include a manifold configured to direct the gas into the inlet of the fan, at least a portion of the field of view extending through the manifold.

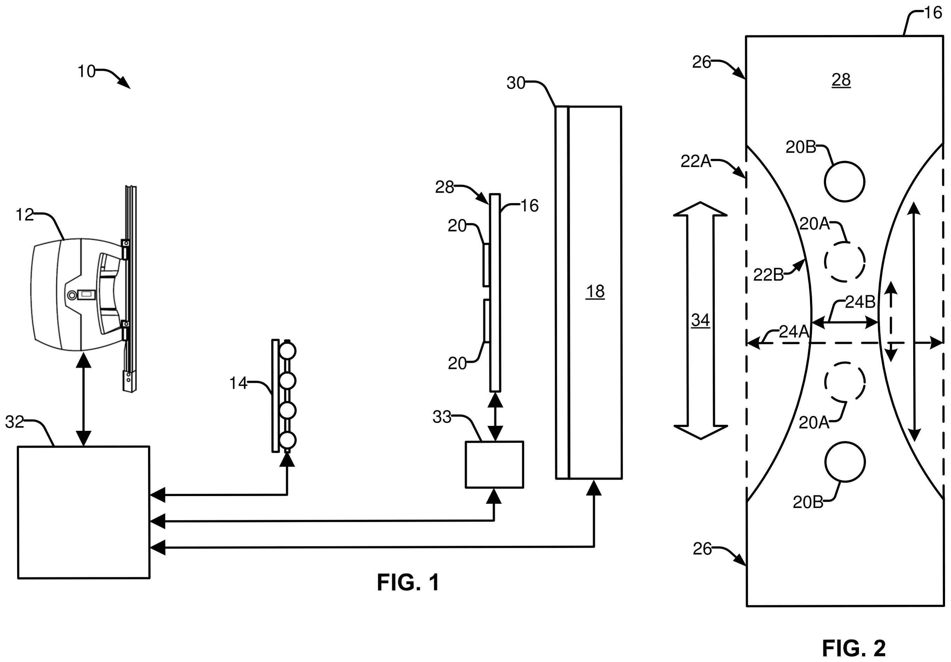

Referring now to the figures, FIG. 1 is an example extensometer system 10 to measure changes to one or more characteristics of a test specimen 16 undergoing a mechanical property testing. The example extensometer system 10 may be connected to, for example, a testing system 33 capable of mechanical testing of the test specimen 16. The extensometer system 10 may measure and/or calculate changes in the test specimen 16 subjected to, for example, compression strength testing, tension strength testing, shear strength testing, bend strength testing, deflection strength testing, tearing strength testing, peel strength testing (e.g., strength of an adhesive bond), torsional strength testing, and/or any other compressive and/or tensile testing. Additionally, or alternatively, the extensometer system 10 may perform dynamic testing.

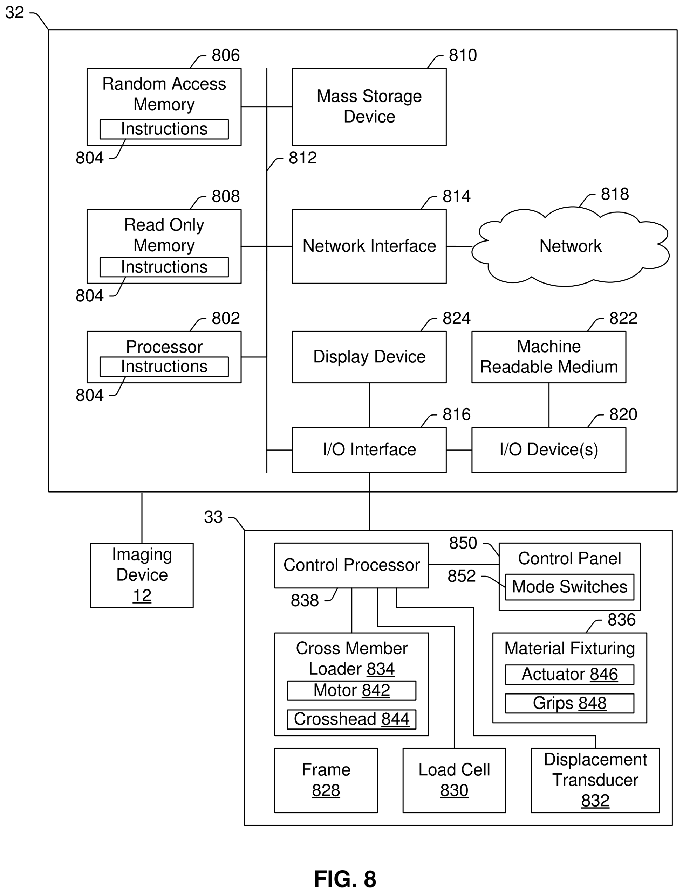

In accordance with disclosed examples, the extensometer system 10 may include the testing system 33 for manipulating and testing the test specimen 16, and/or a computing device 32 communicatively coupled to the testing system 33, the light source, and/or the imaging device, as further shown in FIG. 8. The testing system 33 applies loads to the test specimen 16 and measures the mechanical properties of the test, such as displacement of the test specimen 16 and/or force applied to the test specimen 16.

The extensometer system 10 includes a remote and/or an integral light source 14 (e.g., an LED array) to illuminate the test specimen 16 and/or a reflective back screen 18. The extensometer system 10 includes a computing device 32 (see also FIG. 8) and a camera or imaging device 12. In some examples, the light source 14 and the imaging device 12 are configured to transmit and receive in the infrared (IR) wavelengths; however, other wavelengths are similarly applicable. In some examples, one or both of the light source 14 or the imaging device 12 include one or more filters (e.g., a polarizing filter), one or more lenses. In some examples, a calibration routine is performed (e.g., a two-dimensional calibration routine) to identify one or more characteristics of the test specimen 16, one or more markers 20 (including a pattern of markers), is additionally used.

In some examples, the back screen 18 is configured to reflect light from the light source 14 back to the imaging device 12. For example, a surface of the back screen 18 may be configured with properties to enhance reflection and/or direct reflected light toward the imaging device. Properties can include a shape of the back screen 18 (e.g. in a parabolic configuration), and/or a treatment to increase reflection (e.g., application of cube corner reflectors, a reflective material, etc.). Additionally or alternatively, a filter 30 can be arranged and/or applied to a surface to increase the amount of reflection and/or direct reflected light in a desired direction and/or wavelength. In some examples, the filter 30 is configured as a collimating filter, to provide as much reflected light as possible toward the imaging device 12 and away from other nearby components.

In disclosed examples, the computing device 32 may be used to configure the testing system 33, control the testing system 33, and/or receive measurement data (e.g., transducer measurements such as force and displacement) and/or test results (e.g., peak force, break displacement, etc.) from the testing system 33 for processing, display, reporting, and/or any other desired purposes. The extensometer system 10 connects to the testing system 33 and software utilizing standard interfaces that includes Ethernet, analog, encoder or SPI. This allows the device to be plugged into and used by existing systems without the need for specialized integration software or hardware. The extensometer system 10 provides axial and transverse encoder or analog information in real-time to the testing system 33. The example extensometer system 10 and the materials testing machine 190 exchange real-time test data, including extension/strain data, with the computing device 32, which may be configured via a wired and/or wireless communications channel. The extensometer system 10 provides measurement and/or calculation of extension/strain data captured from the test specimen 16 subjected to testing in the testing system 33, which in turn, provides stress and extension/strain data to the computing device 32.

As disclosed herein, the captured images are input to the computing device 32 from the imaging device, where one or more algorithms and/or look up tables are employed to calculate multiple axes of extension/strain values for the test specimen 16 (i.e., the change or percentage change in inter-target distance as calculated by image monitoring of the markers 20 affixed to the test specimen 16). Following computation, the data may be stored in memory or output to a network and/or one or more display devices, I/O devices, etc. (see also FIG. 8).

FIG. 2 is an example test specimen 16 for measurement in the extensometer system 10 of FIG. 1. For example, one or more markings are applied to the surface 28 facing the light source 14 and imaging device 12. Grip sections 26 are configured for placement within a grip of the testing system 33 (see also FIG. 8), and apply force to the test specimen 16. For example, a cross-member loader applies force to the specimen 16 under test, while the grips grasp or otherwise couple the test specimen 16 to the testing system 33. A force applicator such as a motor causes the crosshead to move with respect to the frame to apply force to the test specimen 16, as illustrated by double arrow 34. Forces 34 pulling the grip sections 26 away from one another may elongate the test specimen 16, resulting in the markings moving from a first position 20A to a second position 20B. Additionally or alternatively, the markings may change shape or size, which may also be measured by the computing device 32 in view of the captured images. The forces 34 may also cause the edges of the test specimen to move from a first position 22A to a second position 22B. For example, at the first or initial position, the edges have a width 24A, which is reduced to width 24B upon application of the forces 34.

Based on the captured images, the computing device 32 is configured to implement an extension/strain on measurement process. For example, to detect an extension/strain on the test specimen 16, the computing device 32 monitors the images provided via the imaging device 12. When the computing device 32 identifies a change in relative position between two or more of the markers and/or the edges of the test specimen 16 (e.g., compared to an initial location at a beginning of movement of the crosshead), the computing device 32 measures the amount of change to calculate the amount of extension and/or strain on the test specimen 16. As disclosed herein, the markers are configured to reflect light from the light source to the camera, whereas the back screen reflects light to create a dark silhouette for edge analysis. In some examples, the extensometer system 10 is configured to perform optical width measurement of non-transparent test specimen 16.

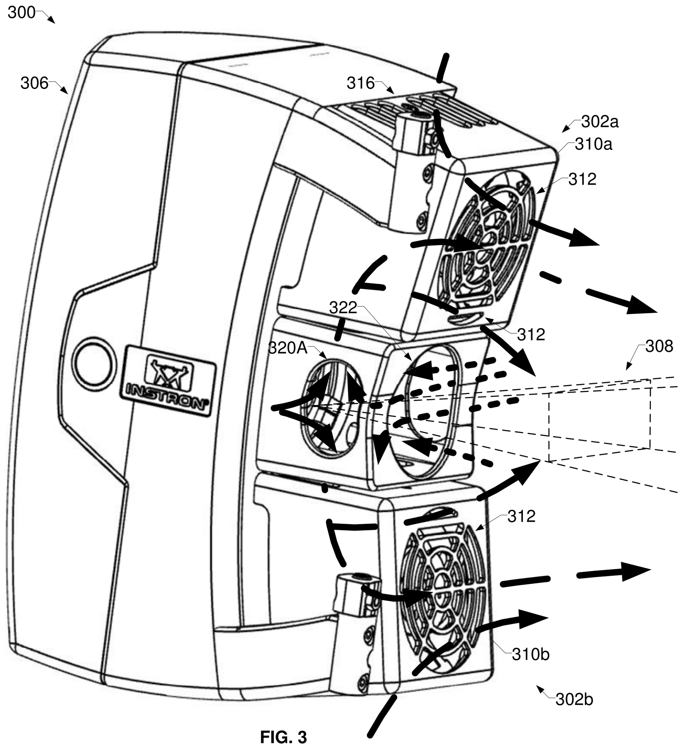

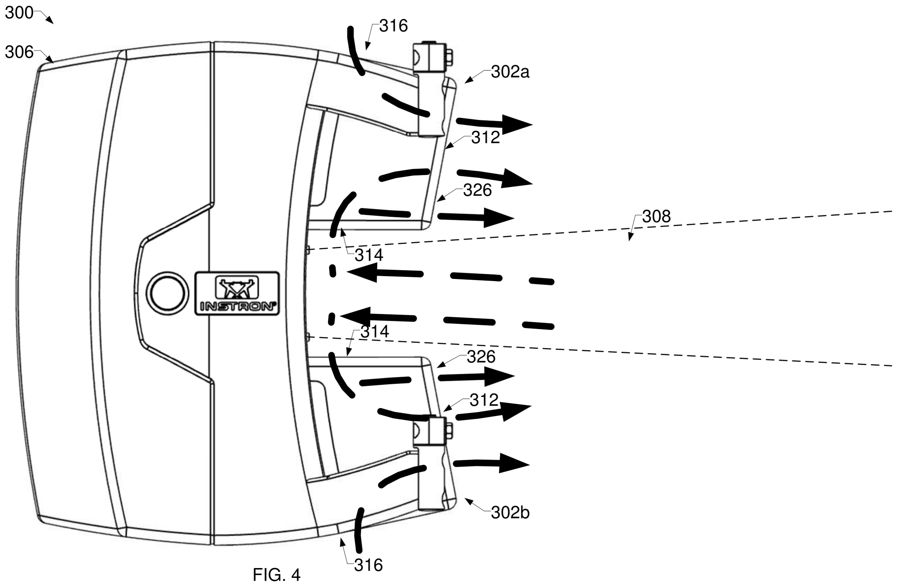

FIG. 3 is a perspective view of an example imaging device 300 that may be used to implement the imaging device 12 of FIG. 1. FIG. 4 is a side elevation view of the example imaging device 300 of FIG. 3. As described in more detail below, the example imaging device 300 includes fans 302 to reduce imaging noise resulting from turbulence in the field of view of the imaging device 300.

The imaging device 300 of FIG. 3 includes two fans 302a, 302b, an optical sensor 304, and a sensor housing 306. The sensor housing 306 houses the optical sensor 304, as well as image processing circuitry, power supply circuitry, and/or other components to perform imaging using the optical sensor 304. The sensor housing 306 may further mount the imaging device 300 to a support structure for positioning of the optical sensor 304 with respect to the test specimen 16.

The optical sensor 304 has a field of view 308. For material testing, the optical sensor 304 is oriented such that the test specimen 16 is positioned within the field of view 308 of the optical sensor 304. The volume between the optical sensor 304 and the test specimen 16 is typically filled with a gas, such as an ambient atmosphere (e.g., air). Turbulence of the gas within the field of view can result in noise in the images captured using the optical sensor 304 due to, for example, differences in refractive index from variations in temperature, humidity, and/or density. Imaging noise can reduce the accuracy of measurements.

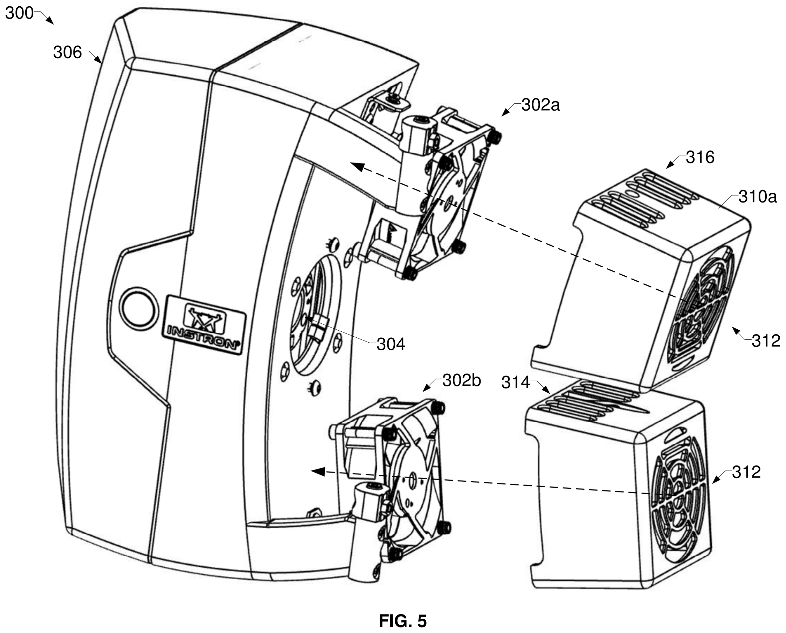

To improve the homogeneity of the gas within the field of view, the example imaging device 300 includes the fans 302a, 302b to generate a substantially consistent and/or uniform flow of gas (e.g., air) within the field of view 308 of the optical sensor 304. The example fans 302a, 302b are positioned within respective fan housings 310a, 310b, which are attached to the sensor housing 306. FIG. 5 is a partially exploded view of the example imaging device 300 of FIG. 3. As illustrated in FIG. 5, the fans 302a, 302b are positioned within the fan housings 310a, 310b to generate respective gas flows through the fan housings 310a, 310b. In the example of FIGS. 3-5, the fans 302a, 302b are positioned on opposing sides of the optical sensor 304, such as on a top and bottom of the optical sensor 304 in the installed orientation.

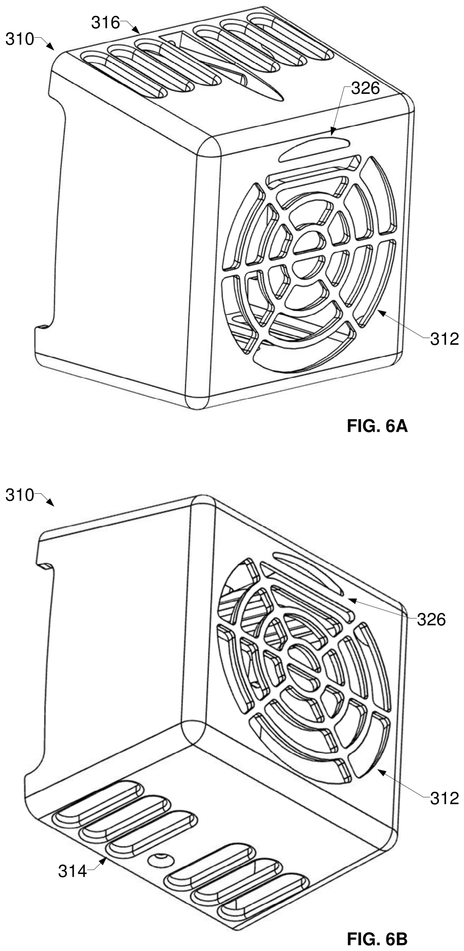

The fan housings 310a, 310b each include an outlet 312 to direct gas blown by the respective fan 302a, 302b toward the field of view 308 of the optical sensor 304. FIGS. 6A and 6B are perspective views of the example fan housing 310a, 310b of FIGS. 3-5. The fan housings 310a, 310b of FIG. 3 may have identical structure, with the fan housing 310a oriented upside-down relative to the fan housing 310b such that the inlets of the fan housings 310a, 310b are closer to the optical sensor 304 and the outer inlets 316 are farther from the optical sensor 304. Additionally, each of the fan housings 310a, 310b and the outlets 312 may be oriented to at least partially align with the field of view 308.

In the example of FIGS. 3-6B, the fan housing 310a, 310b may include one or more secondary outlets 326 configured to direct the gas blown by the fan 302a, 302b toward the portion of the field of view 308 that is adjacent the optical sensor 304. The secondary outlet(s) 326 may direct the gas partially toward the optical sensor 304 and/or partially toward the test specimen.

Each of the fan housings 310a, 310b further includes an inlet 314 directed toward the field of view 308. The fans 302a, 302b receive gas via the inlet 314 and expel the gas via the outlet 312. In the example of FIGS. 3 and 4, the fans 302a, 302b are positioned adjacent the optical sensor 304. In some examples, the fans 302a, 302b being adjacent the optical sensor 304 involve locating the fans 302a, 302b as close as can practically be achieved while not interfering with a field of view 308. Additionally or alternatively, the fans 302a, 302b are positioned adjacent the optical sensor 304 by being sufficiently close to the optical sensor 304 to effect a gas sweeping over a lens of the optical sensor 304 into the inlets 314 and/or incurring movement of the gas over a lens of the optical sensor 304 by intake of the gas into the inlets 314. For example, the inlet 314 (e.g., the center of the inlet 314) is positioned farther toward a rear end of the fan housing 310a, 310b than a front end of the fan housing 310a, 310b (the front end of the fan housing 310a, 310b being closer to the test specimen 16 than the rear end of the fan housing 310a, 310b). By positioning the inlets 314 to receive gas from the volume around the optical sensor 304, the example fans 302a, 302b improve the homogeneity of the gas over a greater portion of the field of view 308 to further reduce imaging noise. Additionally, the sweeping of the gas over the lens of the optical sensor 304 improves the cooling of the optical sensor 304.

The example gas outlets 312 and the example gas inlets 314 have a width that is at least the width of the field of view 308 of the optical sensor 304. However, in other examples, the widths of the gas outlets 312 and/or the gas inlets 314 may be configured to obtain the desired gas flow characteristics.

The example fan housings 310a, 310b include additional outer inlets 316 that may draw gas into the fan 302a, 302b. In some examples, the inlets 314 and the outer inlets 316 are configured to ensure the airflow received through the inlets 314 is sufficient to mix the gas within the volume nearest to the optical sensor 304.

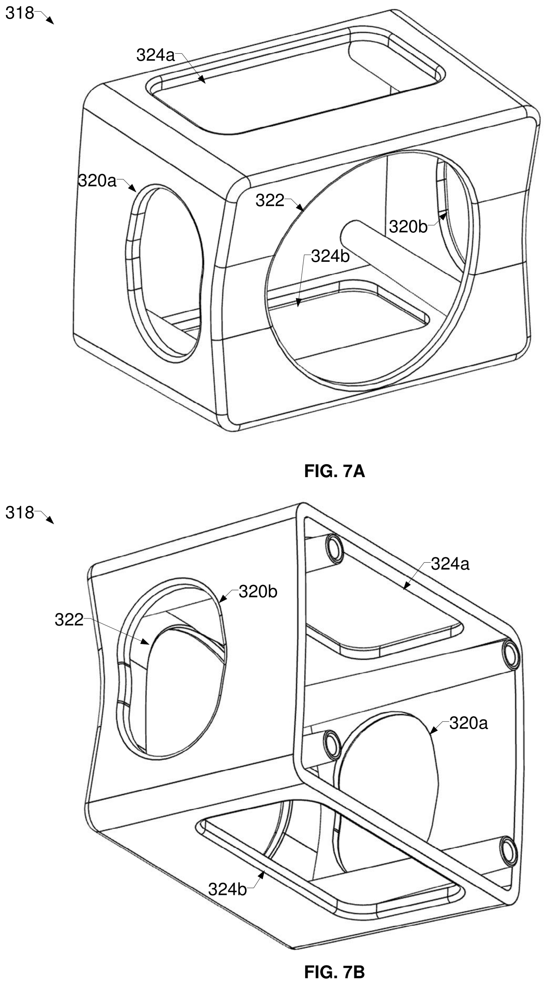

To control gas flow near the optical sensor 304, the example imaging device 300 may further include a manifold 318 positioned between the fans 302a, 302b. FIG. 7A is a top front left perspective view of the example manifold 318 of FIG. 3. FIG. 7B is a bottom rear right perspective view of the example manifold 318 of FIG. 3. The manifold 318 is omitted from FIGS. 4 and 5 to improve visibility of the fan housings 310a, 310b. The example manifold 318 includes gas intake apertures 320a, 320b, a viewing aperture 322, and gas outlets 324a, 324b. The gas intake apertures 320a, 320b permit entry of gas into the manifold 318. The viewing aperture 322 prevents obstruction or occlusion of the field of view 308 by the manifold 318. The viewing aperture 322 may also permit entry of gas into the manifold 318, which can further improve mixing of gas in front of the optical sensor 304 and/or promote cooling of the optical sensor 304.

The gas outlets 324a, 324b permit flow of gas from the manifold 318, and are aligned with the inlets 314 of the fans 302a, 302b. The positioning of the gas intake apertures 320a, 320b and the gas outlets 324a, 324b may be configured to encourage consistent movement and/or mixing of gas within the manifold 318, thereby improving homogeneity of gas within the field of view 308 and reducing imaging noise. Additionally or alternatively, the positioning of the gas intake apertures 320a, 320b and the gas outlets 324a, 324b may be configured to encourage sweeping of the lens of the optical sensor 304 by the gas moving through the manifold 318.

The example fan housings 310a, 310b are attached to the sensor housing 306, such as by fasteners and/or brackets. The fans 302a, 302b may be attached to the sensor housing 306, or attached to the fan housing 310a, 310b, which is attached to the sensor housing 306.

While the example of FIGS. 3-5 includes two fans 302a, 302b, in other examples one fan or three or more fans may be provided to mix the gas in the field of view 308.

FIG. 8 is a block diagram of an example extensometer system 10 of FIG. 1. As shown in FIG. 1, the extensometer system 10 includes the testing system 33 and the computing device 32. The example computing device 32 may be a general-purpose computer, a laptop computer, a tablet computer, a mobile device, a server, an all-in-one computer, and/or any other type of computing device. The computing device 32 of FIG. 8 includes a processor 802, which may be a general-purpose central processing unit (CPU). In some examples, the processor 802 may include one or more specialized processing units, such as FPGA, RISC processors with an ARM core, graphic processing units, digital signal processors, and/or system-on-chips (SoC). The processor 802 executes machine-readable instructions 804 that may be stored locally at the processor (e.g., in an included cache or SoC), in a random access memory 806 (or other volatile memory), in a read-only memory 808 (or other non-volatile memory such as FLASH memory), and/or in a mass storage device 810. The example mass storage device 810 may be a hard drive, a solid-state storage drive, a hybrid drive, a RAID array, and/or any other mass data storage device. A bus 812 enables communications between the processor 802, the RAM 806, the ROM 808, the mass storage device 810, a network interface 814, and/or an input/output interface 816.

An example network interface 814 includes hardware, firmware, and/or software to connect the computing device 32 to a communications network 818 such as the Internet. For example, the network interface 814 may include IEEE 802.X-compliant wireless and/or wired communications hardware for transmitting and/or receiving communications.

An example I/O interface 816 of FIG. 8 includes hardware, firmware, and/or software to connect one or more input/output devices 820 to the processor 802 for providing input to the processor 802 and/or providing output from the processor 802. For example, the I/O interface 816 may include a graphics-processing unit for interfacing with a display device, a universal serial bus port for interfacing with one or more USB-compliant devices, a FireWire, a field bus, and/or any other type of interface. The example extensometer system 10 includes a display device 824 (e.g., an LCD screen) coupled to the I/O interface 816. Other example I/O device(s) 820 may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device.

The computing device 32 may access a non-transitory machine-readable medium 822 via the I/O interface 816 and/or the I/O device(s) 820. Examples of the machine-readable medium 822 of FIG. 8 include optical discs (e.g., compact discs (CDs), digital versatile/video discs (DVDs), Blu-ray discs, etc.), magnetic media (e.g., floppy disks), portable storage media (e.g., portable flash drives, secure digital (SD) cards, etc.), and/or any other type of removable and/or installed machine-readable media.

The extensometer system 10 further includes the testing system 33 coupled to the computing device 32. In the example of FIG. 8, the testing system 33 is coupled to the computing device via the I/O interface 816, such as via a USB port, a Thunderbolt port, a FireWire (IEEE 1394) port, and/or any other type serial or parallel data port. In some examples, the testing system 33 is coupled to the network interface 814 and/or to the I/O interface 816 via a wired or wireless connection (e.g., Ethernet, Wi-Fi, etc.), either directly or via the network 818.

The testing system 33 includes a frame 828, a load cell 830, a displacement transducer 832, a cross-member loader 834, material fixtures 836, and a control processor 838. The frame 828 provides rigid structural support for the other components of the testing system 33 that perform the test. The load cell 830 measures force applied to a material under test by the cross-member loader 834 via the grips 836. The cross-member loader 834 applies force to the material under test, while the material fixtures 836 (also referred to as grips) grasp or otherwise couple the material under test to the cross-member loader 834. The example cross-member loader 834 includes a motor 842 (or other actuator) and a crosshead 844. As used herein, a "crosshead" refers to a component of a material testing system that applies directional (axial) and/or rotational force to a specimen. A material testing system may have one or more crossheads, and the crosshead(s) may be located in any appropriate position and/or orientation in the material testing system. The crosshead 844 couples the material fixtures 836 to the frame 828, and the motor 842 causes the crosshead to move with respect to the frame to position the material fixtures 836 and/or to apply force to the material under test. Example actuators that may be used to provide force and/or motion of a component of the extensometer system 10 include electric motors, pneumatic actuators, hydraulic actuators, piezoelectric actuators, relays, and/or switches.

While the example testing system 33 uses a motor 842, such as a servo or direct-drive linear motor, other systems may use different types of actuators. For example, hydraulic actuators, pneumatic actuators, and/or any other type of actuator may be used based on the requirements of the system.

Example grips 836 include compression platens, jaws or other types of fixtures, depending on the mechanical property being tested and/or the material under test. The grips 836 may be manually configured, controlled via manual input, and/or automatically controlled by the control processor 838. The crosshead 844 and the grips 836 are operator-accessible components.

The extensometer system 10 may further include one or more control panels 850, including one or more mode switches 852. The mode switches 852 may include buttons, switches, and/or other input devices located on an operator control panel. For example, the mode switches 852 may include buttons that control the motor 842 to jog (e.g., position) the crosshead 844 at a particular position on the frame 828, switches (e.g., foot switches) that control the grip actuators 846 to close or open the pneumatic grips 848, and/or any other input devices to control operation of the testing system 33.

The example control processor 838 communicates with the computing device 32 to, for example, receive test parameters from the computing device 32 and/or report measurements and/or other results to the computing device 32. For example, the control processor 838 may include one or more communication or I/O interfaces to enable communication with the computing device 32. The control processor 838 may control the cross-member loader 834 to increase or decrease applied force, control the fixture(s) 836 to grasp or release a material under test, and/or receive measurements from the displacement transducer 832, the load cell 830 and/or other transducers.

The example control processor 838 is configured to implement an extension/strain measurement process when a test specimen 16 is subjected to testing in the testing system 33. For example, to detect an extension/strain on the test specimen 16, the control processor 838 monitors the images provided via the imaging device 12. When the control processor 838 identifies a change in location and/or position of the edges 22 of the test specimen 16 (e.g., compared to an initial location at a beginning of movement of the crosshead 844), the control processor 838 measures the amount of change to calculate the amount of extension and/or strain on the test specimen 16. For example, real-time video provided by the imaging device 12 captures the absolute position of edges 22, and monitors their relative movement over the course of the several images to calculate extension/strain in real time. The stress data and the strain data exchanged among the extensometer system 10, the testing system 33 and the computing device 32, and typically organized and displayed via the display device 824.

The present methods and systems may be realized in hardware, software, and/or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer-readable) medium (e.g., FLASH drive, optical disk, magnetic storage disk, or the like) having stored thereon one or more lines of code executable by a machine, thereby causing the machine to perform processes as described herein. As used herein, the term "non-transitory machine-readable medium" is defined to include all types of machine-readable storage media and to exclude propagating signals.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

## Claims

1. A video extensometer, comprising:
an optical sensor having a field of view; and
a fan positioned within a housing and adjacent the optical sensor, and configured to mix a gas within the field of view of the optical sensor, the housing having a inlet directed toward the field of view of the optical sensor and adjacent to the optical sensor to draw gas from a region within the field of view of the optical sensor, and the housing having an outlet configured to direct the gas blown by the fan into the field of view of the optical sensor to mix the gas within the field of view of the optical sensor.

2. The video extensometer as defined in claim 1, wherein the housing comprises a secondary outlet directed toward the field of view adjacent to the optical sensor and configured to direct at least a portion of the gas blown by the fan toward the portion of the field of view adjacent to the optical sensor.

3. The video extensometer as defined in claim 1, further comprising a second fan positioned within a second housing and adjacent the optical sensor, and configured to mix the gas within the field of view of the optical sensor, the second housing having a second inlet directed toward the region within the field of view of the optical sensor adjacent to the optical sensor to draw the gas from the region within the field of view of the optical sensor, and the housing having a second outlet configured to direct the gas blown by the second fan to mix the gas in the field of view.

4. The video extensometer as defined in claim 3, wherein the first fan and the second fan are positioned on opposite sides of the optical sensor.

5. The video extensometer as defined in claim 3, wherein the fan is located above the optical sensor and the second fan is located below the optical sensor in an installed arrangement.

6. The video extensometer as defined in claim 3, wherein the second housing comprises a secondary outlet directed toward the field of view adjacent to the optical sensor and configured to direct at least a portion of the gas blown by the second fan toward the portion of the field of view adjacent to the optical sensor.

7. The video extensometer as defined in claim 1, wherein the fan is configured to homogenously mix the gas occupying the region within the field of view of the optical sensor between the optical sensor and the test specimen.

8. The video extensometer as defined in claim 1, wherein the fan is positioned at least partially toward the test specimen relative to the optical sensor.

9. The video extensometer as defined in claim 1, wherein the gas is air.

10. The video extensometer as defined in claim 1, wherein the inlet and the outlet are each at least as wide as a width of the test specimen.

11. The video extensometer as defined in claim 1, wherein a center of the inlet is positioned farther toward a rear end of the housing than a front end of the housing, the front end of the housing being closer to the test specimen than the rear end of the housing.

12. The video extensometer as defined in claim 1, wherein the inlet is positioned to draw at least a portion of the gas over a lens of the optical sensor prior to entry of the gas into the housing.

13. The video extensometer as defined in claim 1, wherein the fan is positioned to mix the gas for an entire length of the field of view between the optical sensor and the test specimen.

14. The video extensometer as defined in claim 1, further comprising a manifold configured to direct the gas into the inlet of the fan, at least a portion of the field of view extending through the manifold.
